# EUROPÄISCHE PATENTSCHRIFT

(11) **EP 3 831 569 B1**
(45) Veröffentlichungstag und Bekanntmachung des Hinweises auf die Patenterteilung: **12.07.2023**
(21) Anmeldenummer: 20210983.1
(22) Anmeldetag: 01.12.2020
(51) Int. Cl.: B29C 48/12, B29C 48/87, B29L 31/00, B29C 48/11, B29C 48/30

(54) **VERFAHREN ZUR HERSTELLUNG EINES KUNSTSTOFFPROFILS**
METHOD FOR PRODUCING A PLASTIC PROFILE
PROCÉDÉ DE FABRICATION D'UN PROFILÉ EN MATIÈRE SYNTHÉTIQUE

(30) Priorität: 06.12.2019 DE 102019133348
(43) Veröffentlichungstag der Anmeldung: 09.06.2021
(73) Patentinhaber: REHAU Industries SE & Co. KG, 95111 Rehau (DE)
(72) Erfinder: Frohmader, Martin, 95030 Hof (DE); Janssen, Wolfgang, 26789 Leer (DE); Krüger, Carsten, 26441 Jever (DE); Rinck, Kay-Jochen, 95032 Hof (DE); Sander, Ralf, 95494 Gesees (DE); Stenitschka, Michael, 26419 Schortens (DE)

(56) Entgegenhaltungen:
- WO-A1-2012/143373
- DE-A1- 3 937 273
- DE-B4-102008 047 210
- DE-U1-202007 014 876

## Beschreibung

Die Erfindung betrifft ein Verfahren zur Herstellung eines Kunststoff-Profils mit den Merkmalen des Oberbegriffs des Patentanspruchs 1.

Ein derartiges Verfahren ist aus der WO 2012 / 143373 A1 bekannt. Die genannte Druckschrift beschäftigt sich mit der Extrusion von Fensterrahmenprofilen. Derartige Profile weisen regelmäßig sogenannte Mauerhaken auf, welche zur Verankerung des Fensterrahmens im Mauerwerk dienen. Aus Stabilitätsgründen muss sichergestellt sein, dass diese Mauerhaken eine vorgegebene Wandstärke nicht unterschreiten. Um dies zu gewährleisten, ist es bei einer Standardextrusion erforderlich, dass Profil insgesamt mit einer ausreichend großen Wandstärke herzustellen, um die geforderte Dimensionierung der Mauerhaken sicherzustellen. Dies führt regelmäßig dazu, dass das gesamte Profil vergleichsweise "dick" hergestellt werden muss und dadurch mehr Kunststoffmaterial verbraucht wird, als es eigentlich notwendig wäre. Zur Lösung dieses Problems schlägt die genannte Druckschrift vor, lokal - im konkret genannten Fall beispielsweise im Bereich der Mauerhaken - eine gezielte Temperierung des Werkzeugs vorzunehmen, um durch ein entsprechendes Heizen bzw. Kühlen lediglich die Wandstärke der Mauerhaken zu beeinflussen, wohingegen die Profilstärke des restlichen Fensterrahmenprofils hiervon praktisch unbeeinflusst bleibt. Durch eine Beheizung der entsprechenden Sektion im Werkzeug wird die Viskosität der Kunststoffschmelze lediglich lokal reduziert und dadurch der Schmelzefluss dort erhöht, was sich in einer lediglich lokal erhöhten Wandstärke niederschlägt. Bei einer Kühlung hingegen reduziert sich die Wandstärke lokal entsprechend. Durch die so erzielbare gezielte Beeinflussung der Wandstärke des Profils lediglich im Bereich der Mauerhaken soll insgesamt eine nicht unerhebliche Materialeinsparung realisiert werden. Gleiches gilt entsprechend für andere Bereiche der Extrusionsprofile, die stegförmig ausgebildet sind. Nachteilig bei dem vorgenannten Verfahren ist jedoch, dass dieses den konkreten geometrischen Anforderungen hinsichtlich der Mauerhaken bzw. anderer stegförmiger Bereiche des Profilquerschnitts im Einzelfall nicht genügend Rechnung trägt und somit der Effekt der Materialeinsparung begrenzt ist.

Die DE 20 2007 014876 U1 offenbart ein Verfahren zur Herstellung von Kunststoff-Profilen im Extrusionsverfahren, wobei das Extrusionswerkzeug eine Temperiereinrichtung mit mehreren Temperiersektionen aufweist. Die DE 10 2008 047210 B4 zeigt eine Extrusionslinie zur Herstellung von Kunststoffrohren, bei der die formgebende Düse des Extrusionswerkzeugs umfangsseitig in einzelne Segmente aufgeteilt ist, die jeweils über eine Heiz- und Kühleinrichtung verfügen. Die DE 39 37 273 A1 offenbart ein Extrusionsverfahren zur Herstellung von Rohren und Profilen, bei dem die Schmelze im Extrudierspalt temperaturgeregelt wird.

Der Erfindung liegt die Aufgabe zugrunde, ein Verfahren mit den eingangs beschriebenen Merkmalen anzugeben, welches eine verbesserte lokale Temperierung ermöglicht.

Erfindungsgemäß wird diese Aufgabe durch die Merkmale des Patentanspruchs 1 gelöst. Mithilfe der erfindungsgemäßen Lehre ist es möglich, innerhalb einer Temperiersektion eine wesentlich genauer an die jeweiligen Anforderungen angepasste und damit exaktere Steuerung bzw. Regelung der entsprechenden Wandstärke des einzelnen stegförmigen Vorsprungs vorzunehmen. Hierdurch lässt sich das Potenzial der Materialeinsparung bei der Herstellung des Extrusionprofils sehr gut ausschöpfen. Vorzugsweise sind die Temperiervorrichtungen innerhalb einer Temperiersektion so dimensioniert und voneinander beabstandet, dass die Innenwandung des Extrusionswerkzeugs innerhalb einer Temperiersektion mehrere voneinander getrennte temperierte Bereiche aufweist. Durch die voneinander getrennten temperierten Bereiche ist es möglich, auch innerhalb einer einzelnen Temperiersektion, welche beispielsweise zur Dimensionierung eines einzelnen Mauerhaken eines Fensterrahmenprofils dient, eine differenzierte Kühlung bzw. Beheizung vorzunehmen, um die Dimensionierungsanforderungen an den stegförmigen Vorsprung des Extrusionsprofils optimal zu erfüllen. Zweckmäßigerweise beträgt innerhalb einer Temperiersektion der Abstand zwischen den Temperiervorrichtungen in Profilquerschnittsrichtung gesehen mindestens 2 mm, vorzugsweise mindestens 3 mm. Innerhalb einer Temperiersektion beträgt die Erstreckung der einzelnen Temperiervorrichtungen in Profilquerschnittsrichtung gesehen vorzugsweise höchstens 3 mm, besonders bevorzugt höchstens 2 mm.

Bei dem Heiz- bzw. Kühlmedium kann es sich um eine Flüssigkeit, beispielsweise Wasser oder Öl, oder aber auch um ein Gas, beispielsweise Luft, handeln. Der Kanal ist erfindungsgemäß in einen in das Extrusionswerkzeug einschiebbaren Einsatz der Temperiersektion integriert, der die Wärme des Heizmediums bzw. die Kälte des Kühlmediums an die Innenwandung des Extrusionswerkzeugs herantransportiert. Vorzugsweise ist der Einsatz im Querschnitt gesehen C- oder E-förmig ausgebildet und bildet hierdurch die voneinander beabstandeten Temperiervorrichtungen der Temperiersektion. Der Einsatz besteht zweckmäßigerweise aus einem Material mit hoher Wärmeleitfähigkeit λ > 100 W/mK, z.B. einem Metall, insbesondere Kupfer, einer Kupferlegierung oder Aluminium. Der Einsatz weist im eingebauten Zustand zweckmäßigerweise nur einen sehr geringen Abstand, z.B. < 1 mm, zur Innenwandung des Extrusionswerkzeugs auf, um eine besonders gezielte Temperierung zu ermöglichen.

Zweckmäßigerweise weist die Ausnehmung im Extrusionswerkzeug zur Aufnahme des Einsatzes bereichsweise ein Spiel auf, welches zur thermischen Isolierung des Extrusionswerkzeugs gegenüber dem Einsatz dient. Hierdurch ist gewährleistet, dass die einzelnen, voneinander beanstandeten Temperiervorrichtungen auch wirklich räumlich getrennt voneinander ihre Wirkung entfalten und innerhalb einer Temperiersektion gezielt räumlich voneinander getrennte, separate Abschnitte der Innenwandung des Werkzeuges beheizen bzw. kühlen.

Vorzugsweise beträgt die Erstreckung des Einsatzes in Extrusionsrichtung gesehen weniger als 20 mm, vorzugsweise weniger als 18 mm. Diese kurze axiale Erstreckung gewährleistet eine gleichmäßige Temperierung in Extrusionsrichtung, vereinfacht den konstruktiven Aufwand und ist hinsichtlich der Beeinflussung der Dimensionierung des entsprechenden Abschnittes des Extrusionsprofils ausreichend.

Im Folgenden wird die Erfindung anhand einer lediglich ein Ausführungsbeispiel darstellenden Zeichnung ausführlich erläutert. Es zeigen schematisch:
- Fig. 1: eine Kombination aus Fensterflügel und Fensterrahmen im Querschnitt gesehen
- Fig. 2: die Darstellung eines erfindungsgemäßen Verfahrens anhand einer Querschnittsdarstellung des entsprechenden Extrusionswerkzeugs und
- Fig. 3: eine 3-D Darstellung der in Fig. 2 gezeigten Extrusionswerkzeug-Konstruktion.

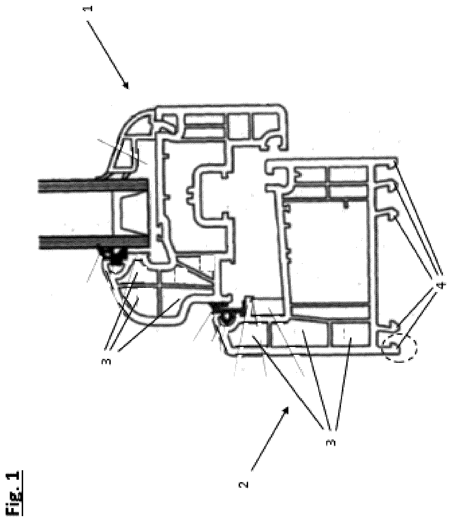

Die Figur 1 zeigt im Querschnitt gesehen eine Kombination aus einem Fensterflügel 1 und einem Fensterrahmen 2, wobei sowohl Fensterflügel 1 als auch Fensterrahmen 2 jeweils mittels eines Kunststoff-Extrusionsverfahrens hergestellt wurden. Es ist erkennbar, dass sowohl das Fensterflügel-Profil 1 als auch das Fensterrahmen-Profil 2 jeweils eine vergleichsweise komplexe Geometrie aufweisen über eine Vielzahl von Hohlkammern 3 verfügen. Beim Fensterrahmen 2 ist ferner erkennbar, dass dieser an seinem unteren Ende über insgesamt fünf sogenannte Mauerhaken 4 verfügt, welche zur mechanischen Befestigung des Fensterrahmens 2 im (nicht dargestellten) Mauerwerk eines Gebäudes dienen. Diese Mauerhaken 4 müssen aus Festigkeitsgründen eine bestimmte Mindeststärke aufweisen.

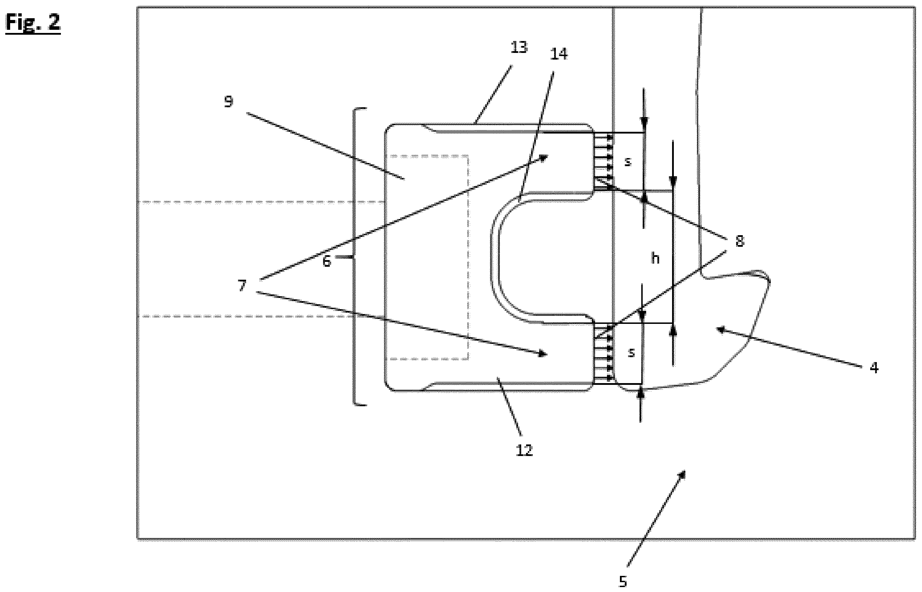

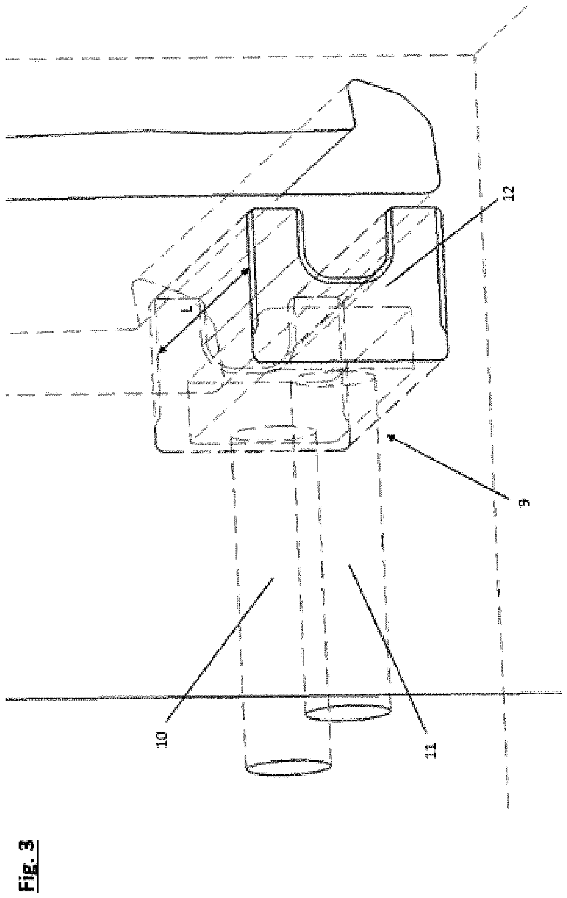

Um während des Extrusionsverfahrens die Geometrie der Mauerhaken 4, insbesondere deren Wandstärke genau zu steuern bzw. zu regeln, wird das in den Figuren 2 und 3 dargestellte erfindungsgemäße Herstellungsverfahren eingesetzt. Die Fig. 2 zeigt ausschnittsweise ein Extrusionswerkzeug 5, mit dem das in Fig. 1 dargestellte Fensterrahmenprofil 2 hergestellt wird. Zu erkennen ist in Fig. 2 das Extrusionswerkzeug 5 im Bereich des Mauerhakens 4 in Fig. 1 links unten, der dort durch einen gestrichelten Kreis hervorgehoben ist. Beim Extrusionsverfahren wird zur Profilformgebung Kunststoffschmelze durch das Extrusionswerkzeug 5 geführt. Im Extrusionswerkzeug 5 ist für alle fünf Mauerhaken 4 - also für jeden entsprechenden einzelnen stegförmigen Vorsprung - jeweils eine Temperiersektion 6 vorgesehen, von denen in Fig. 2 entsprechend diejenige für den in Fig. 1 hervorgehobenen Mauerhaken 4 links unten dargestellt ist. Während des Extrusionsverfahrens erfolgt in jeder Temperiersektion 6 des Extrusionswerkzeugs 5 eine gezielt lokale Beeinflussung der Wandstärke eines einzelnen stegförmigen Vorsprungs des Kunststoff-Extrusionsprofils 2 - hier also der einzelnen Mauerhaken 4 - durch Temperierung, wobei gattungsgemäß zur lokalen Beeinflussung der Wandstärke pro Temperiersektion 6 mindestens eine Temperiervorrichtung 7 im Extrusionswerkzeug 5 vorgesehen ist, mittels derer die Innenwandung des Extrusionswerkzeugs 5 in der Temperiersektion 6 gezielt beheizt und/oder gekühlt werden kann. Erfindungsgemäß sind nun in jeder Temperiersektion 6 mehrere voneinander beabstandete Temperiervorrichtungen 7 vorgesehen, welche innerhalb einer einzelnen Temperiersektion 6 eine lokal differenzierte Beheizung und/oder Kühlung der Innenwandung des Extrusionswerkzeugs 5 und damit des hinsichtlich seiner Wandstärke zu beeinflussenden, durch das Extrusionswerkzeug 5 durchlaufenden einzelnen stegförmigen Vorsprungs 4 des Kunststoff-Extrusionsprofils 2 ermöglichen.

Die Temperiervorrichtungen 7 sind innerhalb einer Temperiersektion 6 so dimensioniert und voneinander beabstandet, dass die Innenwandung des Extrusionswerkzeugs 5 innerhalb einer Temperiersektion 6 mehrere voneinander getrennte temperierte Bereiche 8 aufweist (s.a. entsprechende in Fig. 2 nach rechts gerichtete Pfeile, die die beiden voneinander separierten Wärme- bzw. Kälteströme symbolisieren, welche durch die beiden Temperiervorrichtungen 7 hervorgerufen werden). Innerhalb einer Temperiersektion 6 beträgt der Abstand der Temperiervorrichtungen 7 in Profilquerschnittsrichtung gesehen mindestens h = 3 mm, vorzugsweise h = 4 mm. Ferner beträgt innerhalb einer Temperiersektion 6 die Erstreckung der einzelnen Temperiervorrichtungen 7 in Profilquerschnittsrichtung gesehen höchstens s = 2 mm, vorzugsweise s = 1,5 mm.

Anhand einer vergleichenden Betrachtung der Fig. 2 und 3 ist erkennbar, dass die Temperiersektionen 6 jeweils einen von einem Heiz- bzw. Kühlmedium durchströmbaren Kanal 9 mit Zulauf 10 und Ablauf 11 aufweisen, der zur gemeinsamen Temperierung aller Temperiervorrichtungen 7 einer Temperiersektion 6 dient. Der Kanal 9 ist in einen in das Extrusionswerkzeug 5 einschiebbaren Einsatz 12 der Temperiersektion 6 integriert, der die Wärme des Heizmediums bzw. die Kälte des Kühlmediums an die Innenwandung des Extrusionswerkzeugs 5 herantransportiert. Der Einsatz 12 besteht aus einem Material mit sehr guter Wärmeleitfähigkeit, z.B. Kupfer oder einer Kupferlegierung. Der Einsatz ist im Querschnitt gesehen C-förmig ausgebildet ist und bildet hierdurch die voneinander beabstandeten Temperiervorrichtungen 7 der Temperiersektion 6. Die Temperiervorrichtungen 7 ragen sehr nah an die entsprechende innere Oberfläche des Extrusionswerkzeugs 5 heran, wodurch die beiden Wärmeeinflusszonen in Form der temperierten Bereiche 8 klar voneinander getrennt sind.

Die Ausnehmung 13 im Extrusionswerkzeug 5 zur Aufnahme des Einsatzes 12 weist bereichsweise ein Spiel 14 auf, welches einen lokalen Abstand zwischen Ausnehmung 13 und Einsatz 12 definiert und zur lokalen thermischen Isolierung des Extrusionswerkzeugs 5 gegenüber dem Einsatz 12 dient, insbesondere quer Heiz- bzw. Kühlrichtung (s. nach rechts zeigende Pfeile in Fig. 2). Die Erstreckung des Einsatzes 12 in Extrusionsrichtung gesehen beträgt weniger als L = 20 mm, vorzugsweise maximal L = 18 mm (s. Fig. 3).

## Patentansprüche

1. Verfahren zur Herstellung eines Kunststoff-Profils (2) mit mindestens einem stegförmigen Vorsprung (4), insbesondere eines Fenster- oder Tür-Hohlkammerprofiles (1), mittels eines Extrusionsverfahrens,
- wobei im Rahmen des Extrusionsverfahrens zur Profilformgebung Kunststoffschmelze durch ein Extrusionswerkzeug (5) geführt wird,
- wobei während des Extrusionsverfahrens in mindestens einer Temperiersektion (6) des Extrusionswerkzeugs (5) eine gezielt lokale Beeinflussung der Wandstärke des Kunststoff-Extrusionsprofils (2) durch Temperierung erfolgt,
- wobei die Temperiersektion (6) einem einzelnen stegförmigen Vorsprung (4) des Kunststoff-Extrusionsprofils (2) zugeordent ist,
- wobei zur lokalen Beeinflussung der Wandstärke pro Temperiersektion (6) mindestens eine Temperiervorrichtung (7) im Extrusionswerkzeug (5) vorgesehen ist, mittels derer die Innenwandung des Extrusionswerkzeugs (5) in der Temperiersektion (6) gezielt beheizt und/oder gekühlt werden kann, und
- wobei mindestens eine Temperiersektion (6) einen von einem Heiz- bzw. Kühlmedium durchströmbaren Kanal (9) aufweist,
**dadurch gekennzeichnet, dass** in jeder Temperiersektion (6) mehrere voneinander beabstandete Temperiervorrichtungen (7) vorgesehen sind, welche innerhalb einer einzelnen Temperiersektion (6) eine lokal differenzierte Beheizung und/oder Kühlung der Innenwandung des Extrusionswerkzeugs (5) und damit des hinsichtlich seiner Wandstärke zu beeinflussenden, durch das Extrusionswerkzeug (5) durchlaufenden einzelnen stegförmigen Vorsprungs (4) des Kunststoff-Extrusionsprofils (2) ermöglichen, dass der Kanal (9) vorzugsweise zur gemeinsamen Temperierung aller Temperiervorrichtungen (7) einer Temperiersektion (6) dient, und dass der Kanal (9) in einen in das Extrusionswerkzeug (5) einschiebbaren Einsatz (12) der Temperiersektion (6) integriert ist, der die Wärme des Heizmediums bzw. die Kälte des Kühlmediums an die Innenwandung des Extrusionswerkzeugs (5) herantransportiert.

2. Verfahren nach Anspruch 1, **dadurch gekennzeichnet, dass** die Temperiervorrichtungen (7) innerhalb einer Temperiersektion (6) so dimensioniert und voneinander beabstandet sind, dass die Innenwandung des Extrusionswerkzeugs (5) innerhalb einer Temperiersektion (6) mehrere voneinander getrennte temperierte Bereiche (8) aufweist.

3. Verfahren nach Anspruch 1 oder 2, **dadurch gekennzeichnet, dass** innerhalb einer Temperiersektion (6) der Abstand zwischen den Temperiervorrichtungen (7) in Profilquerschnittsrichtung gesehen mindestens h = 2 mm, vorzugsweise mindestens h = 3 mm, beträgt.

4. Verfahren nach einem der Ansprüche 1 bis 3, **dadurch gekennzeichnet, dass** innerhalb einer Temperiersektion (6) die Erstreckung der einzelnen Temperiervorrichtungen (7) in Profilquerschnittsrichtung gesehen höchstens s = 3 mm, vorzugsweise höchstens s = 2 mm, beträgt.

5. Verfahren nach einem der Ansprüche 1 bis 4, **dadurch gekennzeichnet, dass** der Einsatz (12) im Querschnitt gesehen C- oder E-förmig ausgebildet ist und hierdurch die voneinander beabstandeten Temperiervorrichtungen (7) der Temperiersektion (6) bildet.

6. Verfahren nach einem der Ansprüche 1 bis 5, **dadurch gekennzeichnet, dass** die Ausnehmung (13) im Extrusionswerkzeug (5) zur Aufnahme des Einsatzes (12) bereichsweise ein Spiel (14) aufweist, welches zur thermischen Isolierung des Extrusionswerkzeugs (5) gegenüber dem Einsatz (12) dient.

7. Verfahren nach einem der Ansprüche 1 bis 6, **dadurch gekennzeichnet, dass** die Erstreckung des Einsatzes (12) in Extrusionsrichtung gesehen weniger als L = 20 mm, vorzugsweise weniger als L = 18 mm, beträgt.

## Claims

1. Method for producing a plastic profile (2) having at least one ridge-shaped projection (4), in particular of a window or door hollow chamber profile (1), by means of an extrusion process,
- wherein plastic melt is passed through an extrusion tool (5) as part of the extrusion process for profile shaping,
- wherein during the extrusion process in at least one tempering section (6) of the extrusion tool (5) a targeted local influencing of the wall thickness of the plastic extrusion profile (2) takes place by means of tempering,
- wherein the tempering section (6) is associated with a single ridge-shaped projection (4) of the plastic extrusion profile (2),
- wherein at least one tempering device (7) is provided in the extrusion tool (5) for locally influencing the wall thickness per tempering section (6), by means of which the inner wall of the extrusion tool (5) can be selectively heated and/or cooled in the tempering section (6), and
- wherein at least one tempering section (6) has a duct (9) through which a heating or cooling medium can flow,
**characterised in that** in each tempering section (6) a plurality of tempering devices (7) spaced apart from one another is provided, which within an individual tempering section (6) enable a locally differentiated heating and/or cooling of the inner wall of the extrusion tool (5) and thus of the individual ridge-shaped projection (4) of the plastic extrusion profile (2) to be influenced with regard to its wall thickness and passing through the extrusion tool (5), **in that** the duct (9) is preferably used for the common tempering of all tempering devices (7) of a tempering section (6), and **in that** the duct (9) is integrated in an insert (12) of the tempering section (6), which can be pushed into the extrusion tool (5) and transports the heat of the heating medium or the cold of the cooling medium to the inner wall of the extrusion tool (5).

2. Method according to claim 1, **characterised in that** the tempering devices (7) within the tempering section (6) are sized and spaced apart from one another in such a way that the inner wall of the extrusion tool (5) within a tempering section (6) has a plurality of tempered regions (8) separated from one another.

3. Method according to claim 1 or 2, **characterised in that** within a tempering section (6) the distance between the tempering devices (7) viewed in the cross-sectional direction of the profile is at least h = 2 mm, preferably at least h = 3 mm.

4. Method according to any one of claims 1 to 3, **characterised in that** within a tempering section (6) the extension of the individual tempering devices (7) viewed in the cross-sectional direction of the profile is at most s = 3 mm, preferably at most s = 2 mm.

5. Method according to any one of claims 1 to 4, **characterised in that** the insert (12) viewed in cross-section is C-shaped or E-shaped and thus forms the tempering device (7) spaced apart from one another of the tempering section (6).

6. Method according to any one of claims 1 to 5, **characterised in that** the recess (13) in the extrusion tool (5) for receiving the insert (12) has a clearance (14) in some areas that thermally insulates the extrusion tool (5) from the insert (12).

7. Method according to any one of claims 1 to 6, **characterised in that** the extension of the insert (12) viewed in the extrusion direction is less than L = 20 mm, preferably less than L = 18 mm.

## Revendications

1. Procédé de fabrication d'un profilé en matière plastique (2) avec au moins une partie faisant saillie en forme d'entretoise (4), en particulier d'un profilé de chambre creuse de fenêtre ou de porte (1), au moyen d'un procédé d'extrusion,
- dans lequel de la matière fondue de matière plastique est guidée par un outil d'extrusion (5) pour le façonnage de profilé dans le cadre du procédé d'extrusion,
- dans lequel une influence locale ciblée de l'épaisseur de paroi du profilé d'extrusion en matière plastique (2) est effectuée par thermorégulation pendant le procédé d'extrusion dans au moins une section de thermorégulation (6) de l'outil d'extrusion (5),
- dans lequel la section de thermorégulation (6) est associée à une partie faisant saillie (4) individuelle en forme d'entretoise du profilé d'extrusion en matière plastique (2),
- dans lequel au moins un dispositif de thermorégulation (7) est prévu dans l'outil d'extrusion (5) pour influencer localement l'épaisseur de paroi par section de thermorégulation (6), au moyen duquel la paroi intérieure de l'outil d'extrusion (5) peut être chauffée et/ou refroidie de manière ciblée dans la section de thermorégulation (6), et
- dans lequel au moins une section de thermorégulation (6) présente un canal (9) pouvant être traversé par un milieu de chauffage ou de refroidissement,
**caractérisé en ce que** sont prévus dans chaque section de thermorégulation (6) plusieurs dispositifs de thermorégulation (7) espacés les uns des autres, lesquels permettent, à l'intérieur d'une section de thermorégulation (6) individuelle, un chauffage et/ou un refroidissement localement différenciés de la paroi intérieure de l'outil d'extrusion (5) et ainsi de la partie faisant saillie (4) individuelle en forme d'entretoise, à influencer quant à son épaisseur de paroi, traversant l'outil d'extrusion (5), du profilé d'extrusion de matière plastique (2), que le canal (9) sert de préférence à la thermorégulation commune de tous les dispositifs de thermorégulation (7) d'une section de thermorégulation (6), et que le canal (9) est intégré dans un insert (12), pouvant être enfilé dans l'outil d'extrusion (5), de la section de thermorégulation (6), qui transporte la chaleur du milieu de chauffage ou le froid du milieu de refroidissement à la paroi intérieure de l'outil d'extrusion (5).

2. Procédé selon la revendication 1, **caractérisé en ce que** les dispositifs de thermorégulation (7) sont dimensionnés et sont espacés les uns des autres à l'intérieur d'une section de thermorégulation (6) de telle sorte que la paroi intérieure de l'outil d'extrusion (5) présente à l'intérieur d'une section de thermorégulation (6) plusieurs zones (8) thermorégulées séparées les unes des autres.

3. Procédé selon la revendication 1 ou 2, **caractérisé en ce que** la distance entre les dispositifs de thermorégulation (7), vus dans la direction de section transversale de profilé, est égale au moins à h = 2 mm, de préférence au moins à h = 3 mm à l'intérieur d'une section de thermorégulation (6).

4. Procédé selon l'une quelconque des revendications 1 à 3, **caractérisé en ce que** l'extension des divers dispositifs de thermorégulation (7) est égale, vue dans la direction de section transversale de profilé, au maximum à s = 3 mm, de préférence au maximum à s = 2 mm à l'intérieur d'une section de thermorégulation (6).

5. Procédé selon l'une quelconque des revendications 1 à 4, **caractérisé en ce que** l'insert (12) est réalisé vu dans la section transversale en forme de C ou en forme de E et forme ainsi les dispositifs de thermorégulation (7), espacés les uns des autres, de la section de thermorégulation (6).

6. Procédé selon l'une quelconque des revendications 1 à 5, **caractérisé en ce que** l'évidement (13) présente, dans l'outil d'extrusion (5) pour recevoir l'insert (12), par endroits un jeu (14), lequel sert à l'isolation thermique de l'outil d'extrusion (5) par rapport à l'insert (12).

7. Procédé selon l'une quelconque des revendications 1 à 6, **caractérisé en ce que** l'extension de l'insert (12) est vue dans la direction d'extrusion inférieure à L = 20 mm, de préférence inférieure à L = 18 mm.
